Europäisches Patentamt

European Patent Office

Office européen des brevets

(11) Publication number: **0 315 550**
**A2**

# (12) EUROPEAN PATENT APPLICATION

(21) Application number: **88402787.1**

(22) Date of filing: **04.11.88**

(51) Int. Cl.⁴: **G 06 F 15/16**

(30) Priority: **06.11.87 US 117564**

(43) Date of publication of application:
**10.05.89 Bulletin 89/19**

(84) Designated Contracting States:
**AT BE CH DE ES FR GB GR IT LI LU NL SE**

(71) Applicant: **ORYX CORPORATION**
**15 Essex Road**
**Paramus New Jersey (US)**

(72) Inventor: **Hiller, John**
**165 West End Avenue Apt. 16K**
**New York New York (US)**

**Johnsen, Howard**
**P.O. Box 106**
**Granite Spring New York (US)**

**Mason, John**
**35 E. Cedar Place**
**Ramsey New Jersey (US)**

**Mulhearn, Brian**
**127 Chatham Avenue**
**Paterson New Jersey (US)**

**Petzinger, John**
**40 Tuscarora Drive**
**Oakland New Jersey (US)**

**Rosal, Joseph**
**6063 Broadway Apt. 2A**
**Bronx New York (US)**

**Satta, John**
**6-11 Granada Cr.**
**White Plains New York (US)**

**Shurko, Gerald**
**50 Tulip Street**
**Ramsey New Jersey (US)**

**Solowiejczyk, Yedidiah**
**855 West End Avenue**
**New York New York (US)**

**Stamm, Kenneth**
**40 E. 94th Street Apt. 9C**
**New York New York (US)**

(74) Representative: **Joly, Jean-Jacques et al**
**CABINET BEAU DE LOMENIE 55, rue d'Amsterdam**
**F-75008 Paris (FR)**

(54) Highly parallel computer architecture employing crossbar switch with selectable pipeline delay.

(57) A crossbar switch (4) in a highly parallel computer architecture for interconnecting any one of a plurality of arithmetic units (2) to any one of a plurality of memories (6) comprising :
a multiplexer section for pivoting switching of signal paths between said arithmetic units (2) and said memories ; and
a control section for controlling said signal path switching to allocate selected signal paths in accordance with an algorithm under execution, said control section comprising control circuitry for creating pipeline delay of steering vectors which specify the memory to be read from and pipeline delay of data returning from the memory.

_FIG.1_

EP 0 315 550 A2

**Description**

# HIGHLY PARALLEL COMPUTER ARCHITECTURE EMPLOYING CROSSBAR SWITCH WITH SELECTABLE PIPELINE DELAY

## BACKGROUND OF THE INVENTION

### 1. Field of the Invention :

The present invention relates to a supercomputer and, more specifically, to a crossbar switch for a very high speed, large grain computer node system incorporating a highly parallel architecture.

### 2. Description of the Related Art :

Supercomputers are typically defined as computers capable of executing 100 million floating point operations per second (MFLOPS). Conventional supercomputers, such as the Cray supercomputer, achieve this phenomenal performance by using an extremely fast clock, on the order of 4 ns per cycle. Unfortunately, such a high-speed clock generates a considerable amount of heat, which requires that such supercomputers remain submerged in liquid for cooling purposes. The design of conventional supercomputers also requires a large physical size for housing a large amount of hardware, such that these units typically occupy a small room. Accordingly, such supercomputers are essentially limited to laboratory applications.

## SUMMARY OF THE INVENTION

The present invention overcomes the forementioned drawbacks by the provision of a unique, highly parallel architecture comprising a plurality of processor nodes, each having a novel crossbar switch which allows any one of a plurality of floating point arithmetic units in each processor node to communicate with any one of a plurality of parallel memory modules. The configuration of the crossbar switch, i.e., the connection between each floating point arithmetic unit and each parallel memory module, may be changed dynamically on a cycle-by-cycle basis in accordance with the algorithm being executed. Although there are certain crossbar usage rules which must be obeyed, the data is distributed over memory such that, for a given algorithm, the floating point arithmetic units can access and operate on data in a highly parallel fashion to achieve supercomputer performance.

The crossbar switch which allows the highly parallel operation is comprised of two basic sections : a multiplexer and a control section. The multiplexer provides the actual switching of signal paths, i.e., connects each floating point arithmetic unit to a particular parallel memory on each clock cycle. The control section determines which connections are made on each clock cycle in accordance with the algorithm under execution. A selectable pipelined delay in the circuitry of the control section provides optimal data transfer efficiency between the processors and memory modules over a wide range of array processing algorithms using interlaced memory reads and writes over a parallel bidirectional data bus.

The highly parallel architecture of the present invention allows true supercomputer performance to be achieved with a clock which runs at conventional PC clock rates of 100 ns per cycle. Thus, the supercomputer of the present invention does not generate excessive heat during operation and may be air cooled.

The unique architecture of the present invention employs "off the shelf" components arranged in a stand alone unit of about one-third the size of conventional supercomputers. This feature, along with air cooling, allows the supercomputer of the present invention to be used in a variety of applications outside the laboratory heretofore impossible with such computing power. The highly parallel structure of the invention also allows most component failures to be bypassed by re- configuring the processing node through the crossbar switch, such that only operational components are used, while fault detection is performed on a failed section.

These and other features and advantages are described below, with reference to the accompanying drawings in which :

## BRIEF DESCRIPTION OF THE DRAWINGS

Fig. 1 shows the overall system architecture of a processor node.

Fig. 2 shows an exemplary eight node configuration.

Fig. 3 shows a memory address mapping diagram.

Fig. 4 shows a mapping diagram of data vectors into memory.

Fig. 5 shows a mapping diagram of matrices into memory.

Fig. 6 shows a plan for data flow of a matrix-matrix multiply diagram.

Fig. 7 shows the design of an 8x8x4 crossbar of the present invention.

Fig. 8 shows the use of half of an 8x8x4 card of Fig. 7 to form a 4x4x4 card.

Fig. 9 shows the combination of two 4x4x4 cards of Fig. 8 to form a 4x4x8 card.

Fig. 10 shows how an 8x8x4 card of Fig. 7 can be made to function as a 2x2x16 card.

Fig. 11 shows the pipelining hardware of the control circuitry for the crossbar switch.

Fig. 12 is a timing diagram of the activity on the crossbar address bus and data bus for a four-cycle delay.

Fig. 13 is a timing diagram for a repetitive pattern of two memory read cycles followed by a memory write cycle with a four-cycle delay.

Fig. 14 is a timing diagram for a repetitive pattern of two memory reads followed by a memory write six-cycle delay, showing how execution time is substantially decreased by using a six-cycle delay.

## DETAILED DESCRIPTION OF THE PREFERRED EMBODIMENT

I. Introduction : Overall Architecture and Principles of Operation

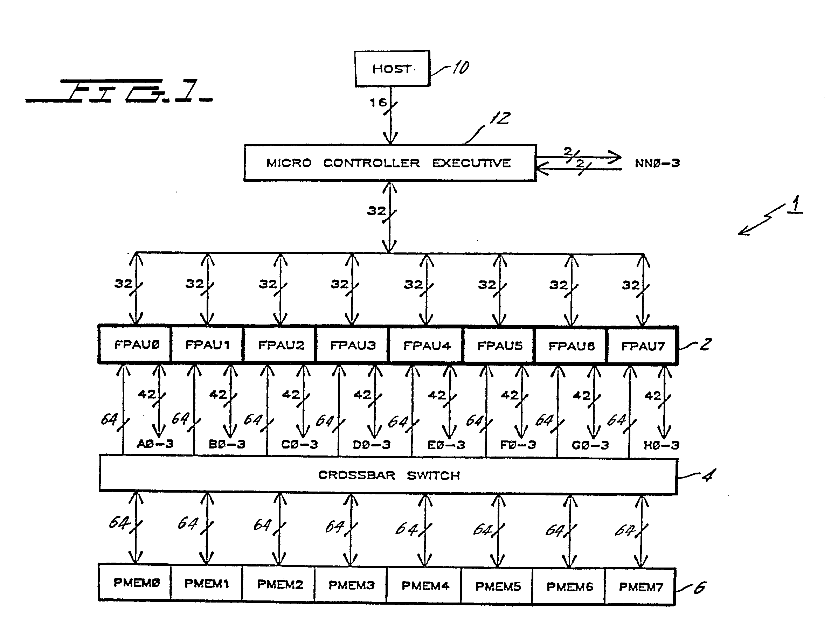

The overall system architecture of a processor node 1 is shown in Fig. 1. A plurality of floating point arithmetic units (FPAU) 2 are connected through a crossbar switch (XBAR) 4 to a plurality of parallel memories (PMEM) 6. The crossbar switch 4 of the present invention, which is described in further detail below, advantageously allows any FPAU 2 to be connected to any PMEM 6.

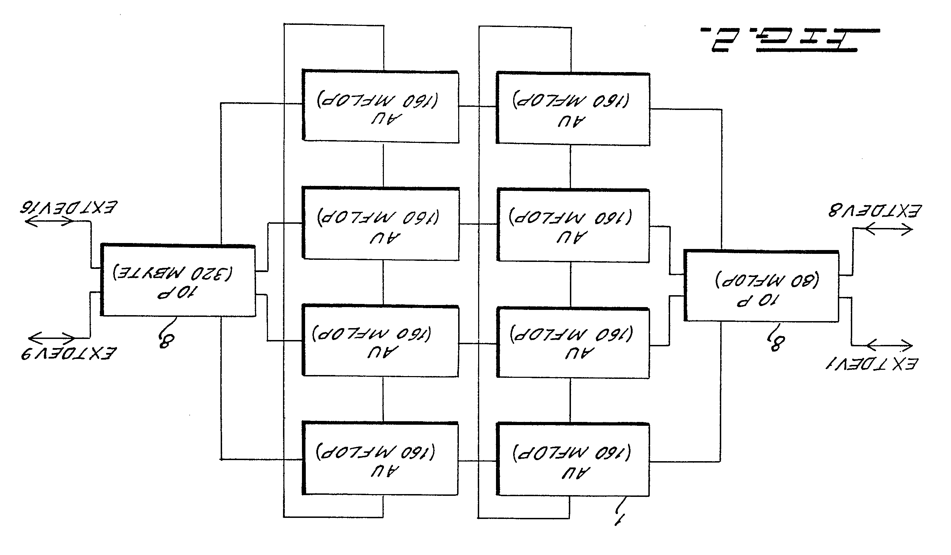

In the preferred embodiment, the processor node of the present invention comprises a 160 MFLOP system configuration. As shown generally in Fig. 2, the processor nodes 1 can be networked together, each node being connected to its nearest neighboring nodes and to a common input-output processor 8. Although Fig. 2 shows an eight node configuration, in the preferred embodiment 64 processor nodes 1 are networked together to increase the system throughput to 10,000 MFLOPS, such that real-time operation for applications involving intensive computation and high bandwidth input/output is possible. The present invention is the first system of such power which is air-cooled and thus has the ability to be installed on ruggedized moveable platforms such as ships and planes.

Referring back to Fig. 1, the host processor 10 is common to all processor nodes 1 and controls the configuration and feed of the nodes by communicating and downloading information to a micro controller executive 12 in each node. The host processor 10 also runs a flow graph editor and flow compiler (not shown), which provide for human interface with the system. In addition to the FPAU's 2, XBAR 4, and PMEM 6 mentioned above, the internal node architecture includes a micro controller executive 12, which monitors and schedules tasks within each node and coordinates the input and output of each node to and from its nearest neighbor nodes.

Each processor node is constructed modularly to allow incremental adjustment of "number crunching" power. Thus, each of the nodes can provide between 20 and 160 MFLOPS of computing power. The unique architecture of the present invention also achieves the following performance characteristics per node :

- a bus bandwidth of 80 million words per second is achieved when all 8 FPAU's are continuously reading from or writing to all 8 PMEM memories. The algorithms which control the switching of the crossbar are designed for maximum usage of system hardware. For most algorithms, the percentage of full bas bandwidth achieved during algorithm execution is nearly 100%.

- A system performance of 80 million instructions per second is attained through the use of eight fully synchronized, concurrently running FPAU's, each of which is continuously executing at a rate of 10 million instructions per second.

- Each FPAU is capable of performing 2 floating point operations (any combination of multiplies & adds) and one fixed point arithmetic/logic operation per instruction cycle. If all FPAU's are concurrently performing floating point operations at their peak rates, then a total system throughput of 160 MFLOP can be achieved. In practice, the number of floating point operations performed is dependent on the algorithm being executed. For example, the radix-2 FFT algorithm, which transfers data to and from memory at the peak rate of 80 million words per second, requires an arithmetic throughput of only 120 MFLOP. As a second example, a convolution algorithm transfers data to and from memory at nearly 100% of full bus bandwidth, and it also performs arithmetic at nearly 100% of peak MFLOP rating.

The processor of the present invention achieves its high performance over a wide range of signal processing algorithms through the use of a novel crossbar switch (XBAR) 4. The XBAR allows each of up to 8 FPAU's to extend their address, data and read/write control buses to any one of up to 8 different memory modules (PMEM's) ; the memory selected by an individual FPAU can be changed dynamically on a cycle-by-cycle basis. No more than one FPAU can write to the same memory during the same bus transfer cycle. However, all FPAU's may read from the same address of any single memory during what is referred to as a "broadcast read" cycle. In order to avoid bus clash, the signal processing algorithms must be developed so that these rules are not violated.

The processor is run by upper level language callable subroutines of standard vector processor types such as the Fast Fourier Transform (FFT), Matrix Inversion, Singular Value algorithms such as adaptive filtering and image enhancement. System resources are allocated by the host 10 to assure that maximum throughput occurs thus minimizing any possible resource idling. If the use of the host 10 as an operator interface is not desired, it can be disconnected. The output of the host 10 can then be burned into PROM located in the executive controller 12 for embedded applications such as sonar or radar.

In developing any single algorithm, such as the FFT, all FPAU's are programmed to concurrently perform their own portion of the algorithm. Once an algorithm is developed,it may then be used in any application without the need for any additional planning of crossbar utilization. In other words, once a family of signal processing algorithms has been developed, the XBAR 4 becomes transparent to any subsequent applications utilizing these processing algorithms, and the 8 FPAU's appear to the user as one single processor with 8 times the performance of the individual FPAU's.

Memory selection among the PMEM's is accomplished by decoding the three least significant bits of the address output from each of the FPAU's. If all 8 FPAU's are concurrently performing a memory access (other than a broadcast read, described above), the three LSB's of their respective output addresses must all be unique in order to obey the crossbar usage rule.

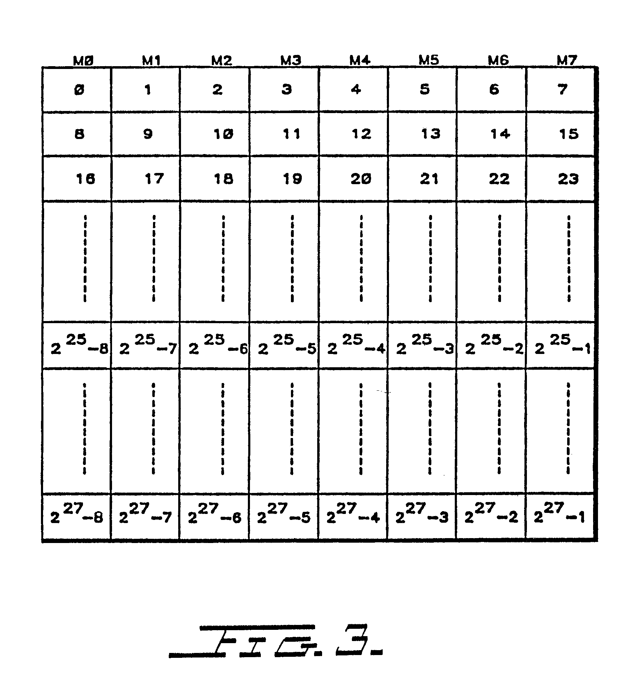

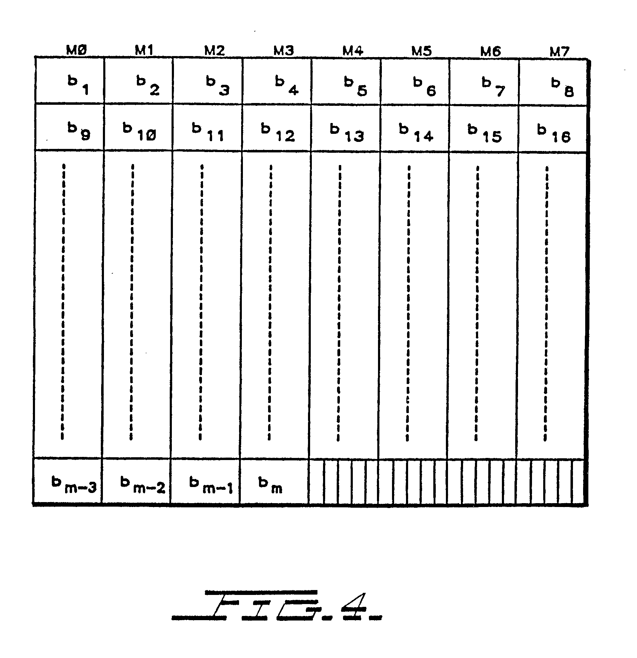

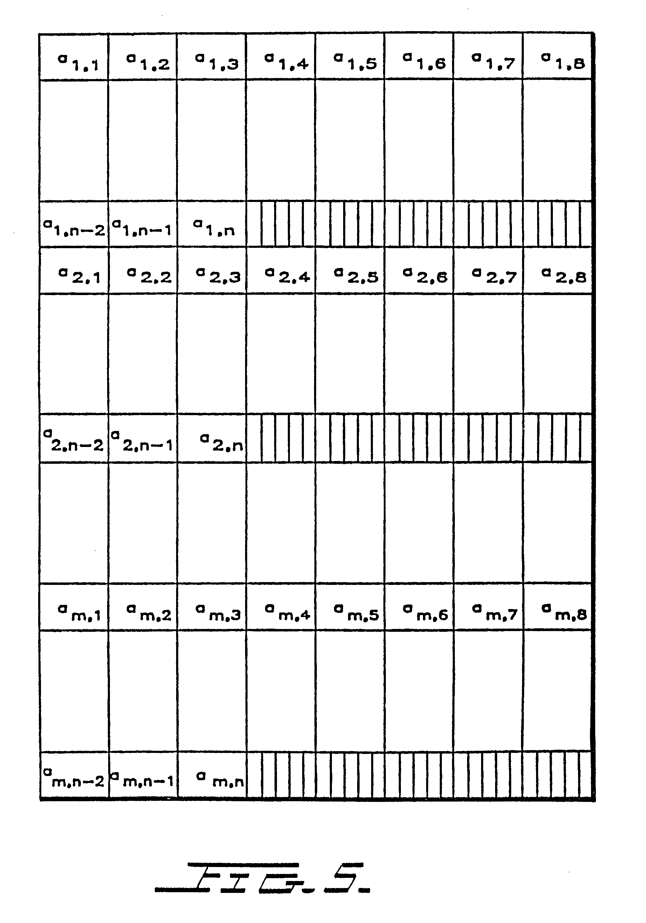

A memory address mapping diagram is presented in Fig. 3. Each of the eight columns represents a different physical memory, and the number inside each cell of any column is the address value required to access that cell of memory. The mapping pattern of data vectors and matrices into memory is presented in Figs. 4 and 5, respectively. Note that vectors and matrix rows are distributed over all memories. Each matrix column, on the other hand, is completely contained in one of the 8 memories. The crossbar rules can now be explained in relation to these data types.

For one dimensional data arrays (vectors), more than one FPAU cannot concurrently access the same vector element, nor can the FPAU's concurrently access vector elements which are displaced from one another by integer multiples of eight locations.

For two dimensional arrays (matrices), more than one FPAU cannot concurrently access any elements either from the same column vector of from column vectors which are displaced from one another by integer multiples of 8 columns.

The only exception to these rules for accessing vectors and matrices is the broadcast read cycle, in which any single element of vector or a matrix can be read concurrently by all FPAU's.

While these rules may at first glance appear overly restrictive, the following example will illustrate both the versatility and the simplicity of the crossbar architecture.

II. Example : Matrix-Matrix Multiply

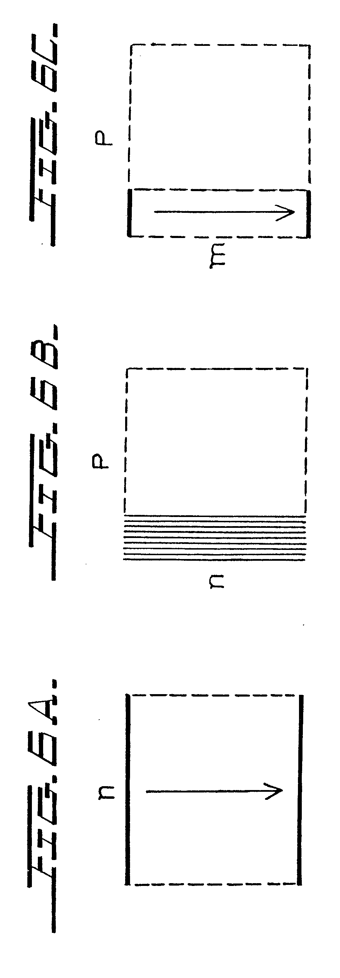

Multiplication of two matrices "A" and "B" results in a product matrix "C". The essence of this algorithm involves repeated computation of vector inner products (sum of products) of all combinations of row vectors of matrix "A" with column vectors of matrix "B". The plan of data flow for this algorithm is presented in Fig. 6.

The first step in the data flow sequence involves the transfer of the first eight column vectors of matrix "B" from PMEM memory into coefficient memories within the FPAU's. Each FPAU reads one of the 8 column vectors (each located in a separate PMEM), and since none of these vectors are integer multiples of eight locations from one another, all 8 FPAU's can read their respective vectors concurrently without bus clash.

The second step in the sequence involves the broadcast read of the first row vector of matrix "A" into all 8 FPAU's accompanied by the computation of the sum of products of the vector elements. Since each FPAU can perform a multiply and an add during each instruction cycle, the vector inner products are computed as fast as the "A" vector elements can be transferred from memory to the FPAU. At the end of the data transfer cycle, each of the 8 FPAU's has computed one element of the product matrix. These elements constitute the first eight elements of the first row of the "C" matrix and they can all be written simultaneously into PMEM memory since they are contained within contiguous columns.

By repeating the second step for all rows of the "A" matrix, the first 8 columns of the product matrix "C" are generated. The entire process is then repeated for each additional group of 8 columns contained in matrix "B", thereby generating corresponding groups of columns in the product matrix.

During this entire processing sequence, crossbar switch 4 can be used at its peak efficiency and, except for the occasional occurrence of the first processing step, the FPAU's are also operating at their peak computational efficiency.

III. Crossbar Switch Architecture :

A crossbar switch is a type of interconnection network. In its purest form, it allows all devices to communicate simultaneously. The switch consists of two sections: a multiplexer and a control section.

The multiplexer section does the actual switching of signal paths. In general, there is a path from every device into the switch. The configuration of the switch determines which pairs of devices (i.e., which PMEM and FPAU) will be connected. In a true crossbar, all connections are possible.

The control section of the switch determines which connections are made at any one time. Each FPAU provides its own portion of the control field to the crossbar switch on every memory access cycle. The set of all of the FPAU control fields determines the configuration of the switch during any given memory access cycle. The crossbar switch configuration is, therefore, predetermined at the time that the FPAU microcode algorithms are developed. This approach eliminates the need for arbitration of access to PMEM's during run time, thereby allowing the crossbar switch to operate at or near 100% efficiency.

The architecture of the XBAR achieves the following performance characteristics :

1. Speed : The XBAR takes less than one clock cycle to set up and pass one piece of data on every bus.

2. Flexibility : The XBAR is able to be switched on each clock cycle.

3. Fall-through Design : the XBAR does not add a pipeline stage to the architecture.

4. Expandability : the XBAR is able to handle different numbers of processors (FPAU's) and memories (PMEM's).

5. Modularity : the XBAR is made of regular building blocks which can be easily interconnected.

6. Ruggedness : The XBAR is able to pass military hardware specifications.

7. Cost Effective : The XBAR is small and easy to produce.

In the preferred embodiment, XBAR 4 is comprised entirely of "off the shelf" parts and uses only two printed circuit designs. One design is a backplane (mother board) and the other is a daughter board. Although only three sizes of XBAR are discussed hereinafter, the design concept is much more general than this.

The crossbar size is referenced by three numbers. The first number is the number of FPAU's in a system. The second is the number of PMEMS and the third is the number of bits carried on each bus. In the preferred embodiment described below, XBAR 4 is an 8x8x64 crossbar connecting 64 signals from 8 FPAU's to 8 PMEM's.

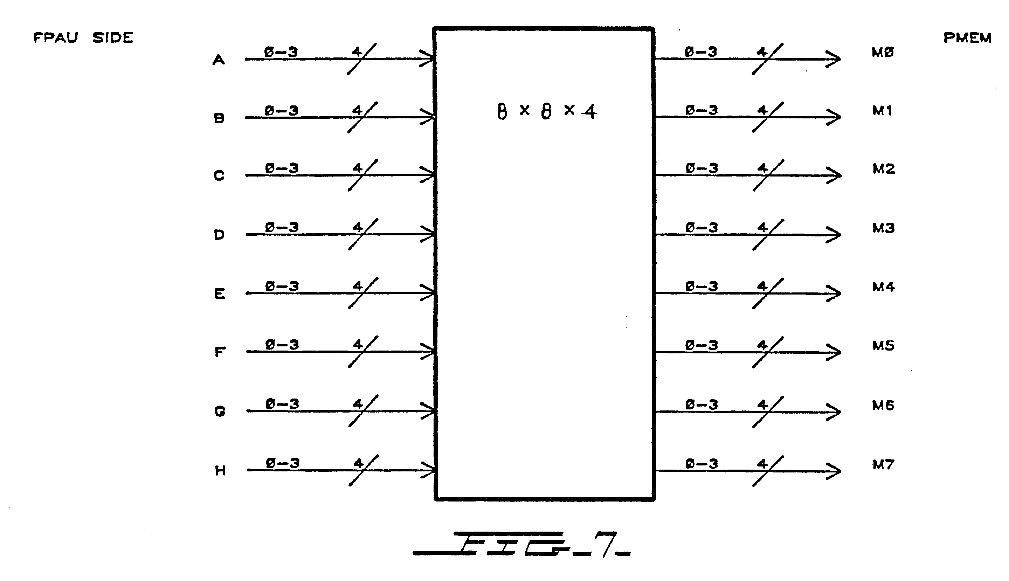

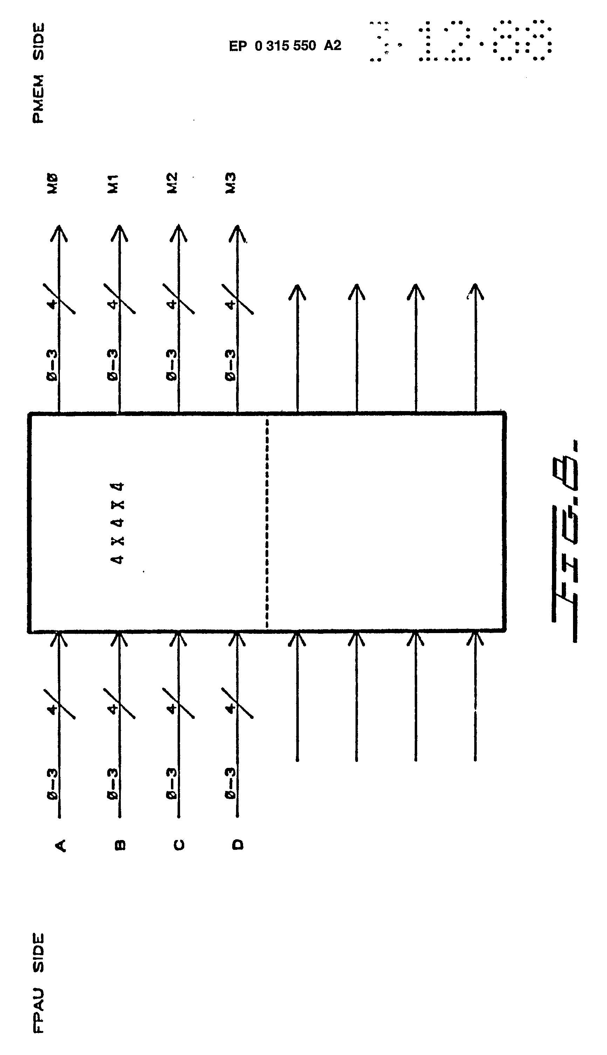

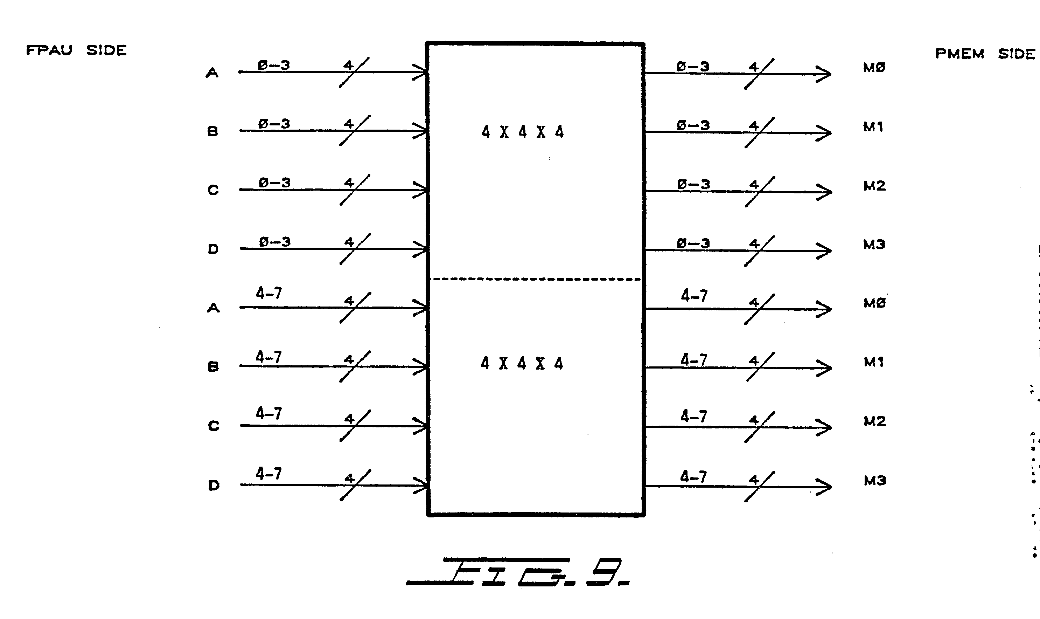

The daughter board design actually comprises a miniature of the crossbar section itself. It can be characterized as an 8x8x4 bit crossbar connecting eight FPAU buses of four bits each to eight PMEM buses of four bits each (Fig. 7). The total number of signals in and out of the multiplexer section of this card is 64 signals. (All signals are ECL 10K differential so a signal requires two wires. This detail will be discussed later). The daughter board also receives 40 control signals. There are five bits of control for each of the eight buses (three bits of PMEM select, one bit of PMEM enable land a direction control bit). By "stacking" 16 of these cards in parallel, an 8x8x64 bit crossbar can be achieved in much the same way that a 64 bit wide memory may be built of 1, 4 or 8 bit wide memory devices. This 8x8x4 bit daughter board card is more than sufficient for a 4x4 crossbar. Only 4 of the 8 FPAU connections and 4 of the 8 PMEM connections will be used. The other connections will be wasted (Fig. 8). In this way, 16 of these cards can form a 4x4x64 crossbar. However, those other connections need not be wasted. The upper half of the 8x8 multiplier section is being used as a 4x4 multiplexer. The lower half could also be used as a 4x4 multiplexer. Thus, the 8x8x4 card can also function as two 4x4x4 "cards". It can be thought of as a 4x4x8 card because there are 4 FPAU buses, 4 PMEM buses and eight bits being carried on each bus (Fig. 9).

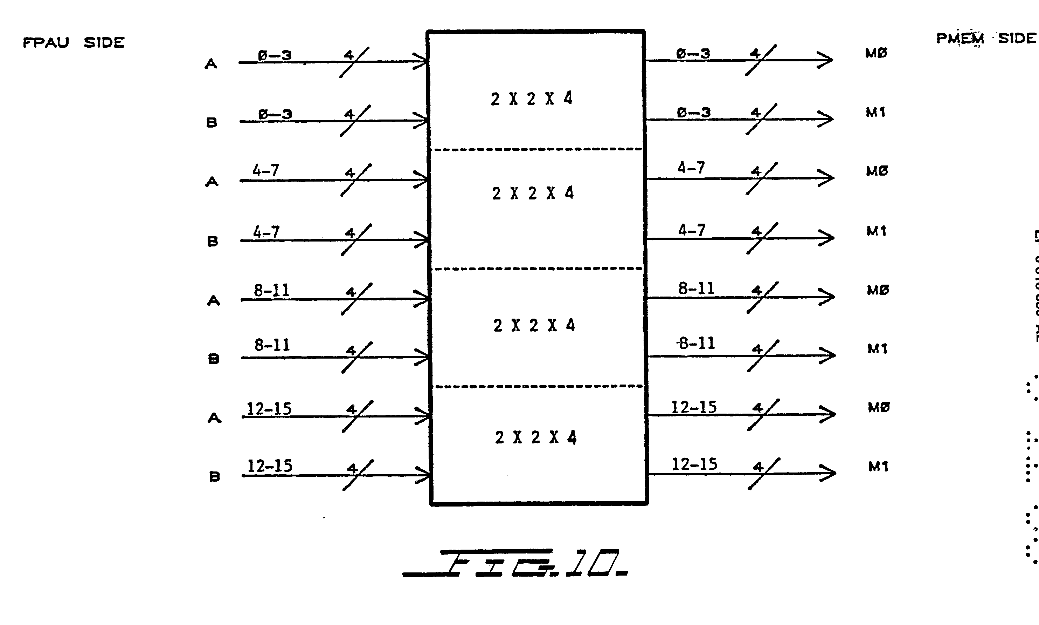

Similarly, an 8x8x4 card can be made to function as a 2x2x16 card (Fig. 10). In fact, the 8x8x4 card, if properly designed, can function as a 16x16x2 card or a 32x32x1 card; even larger switches are possible. The only limitations are physical : the size of the card, the number of logic devices required and the number of I/0 connector pins available. As the number of buses increases, the number of control lines required increases, while the signal lines remains constant :

| | Signal Lines | Minimum of Control Lines Required |
|---|---|---|
| 2x2x16 | 64 | 6 |
| 4x4x8 | 64 | 16 |
| 8x8x4 | 64 | 40 |
| 16x16x2 | 64 | 96 |
| 32x32x1 | 64 | 224 |
| 64x64x1 | 128 | 512 |

The 64 bits of information that pass through the multiplexer portion of XBAR 4 contain : 32 bits of data, 4 bits of byte-wise data parity, 24 bits of vertical address, 3 bits of byte-wise address parity, and 1 bit of pipeline control. These 64 bits are sent as ECL 10K differential signals. They are carried by eight 20 conductor twisted-pair ribbon cables from each FPAU 2 to XBAR 4 and over an equal number of cables from the XBAR 4 to the PMEMS. The 36 bits of data and parity are bidirectional, allowing each FPAU to read or write to its selected PMEM 6. The 27 bits of vertical address are unidirectional flowing from the FPAU's 2 to the PMEM's 6. The XBAR cards carrying the address bits are identical to all the others but their direction controls are not exercised.

Each FPAU 2 sends a number of control signals to XBAR 4. These are : the 3 horizontal address bits that select which PMEM the FPAU is accessing (the steering vector), 1 Write strobe and 1 PMEM enable bit that is used in "broadcast" read mode. (This mode allows all FPAUs 2 to read the same location in the same PMEM 6 simultaneously).

These signals must be operated on differently depending on whether a read or write is being performed. If an FPAU 2 is writing to PMEM 6 the data, address and control information all flow through the XBAR 4 simultaneously, in the same direction and all in one clock cycle. If an FPAU 2 is reading from a PMEM 6, the address and control signals flow toward the PMEM 6 in one clock cycle. Several clock cycles later the data flows back from the PMEM 6. The algorithm must be designed so when that data is flowing back, XBAR 4 is properly configured to get the data to the right FPAU 2.

There is a control circuit in XBAR 4 for each FPAU 2. During a read operation, this circuit delays the memory select signals to only the cards handling the 36 bits of data and parity. This delay matches the read access delay of the PMEM section. When the data from the PMEM 6 enters XBAR 4, the control circuits set the path back to the proper FPAU. So, during read operations, the "data" cards in XBAR 4 function independently from the "address" cards. Consequently, there are two sets of control signals developed.

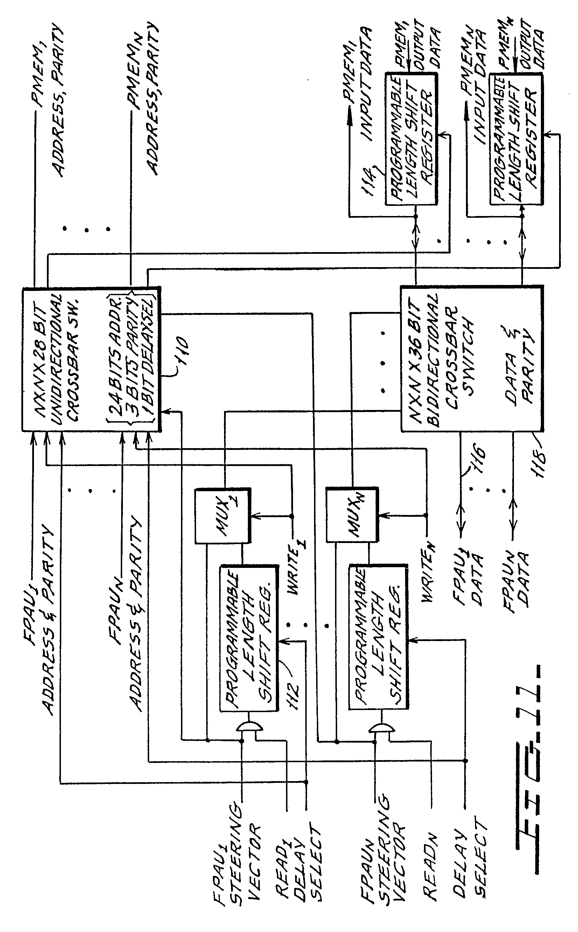

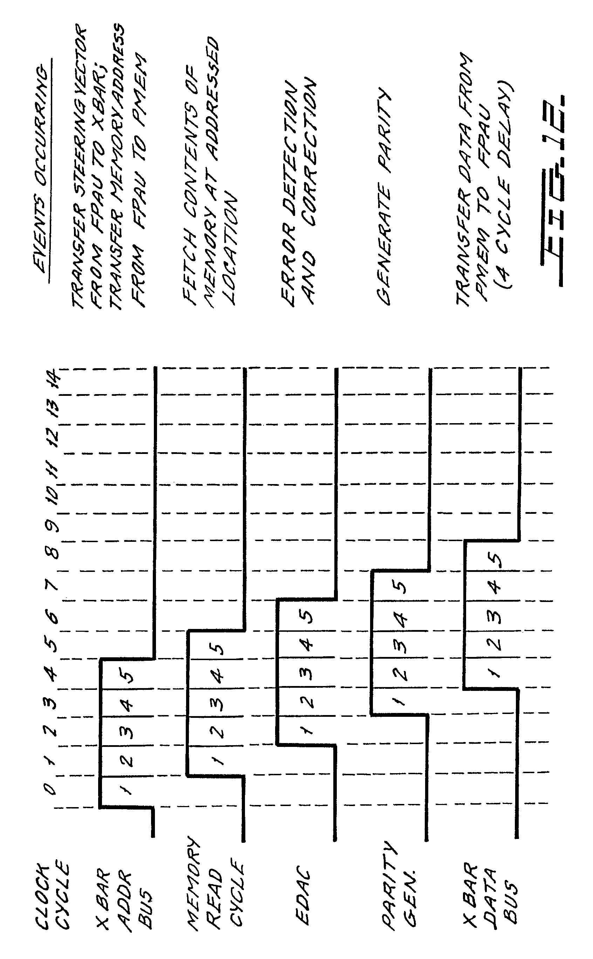

Referring to Fig. 11, when a unit FPAU reads data from a selected PMEM, a programmably selectable delay of either four or six instruction cycles is interposed between the transfer of the memory address over the crossbar address bus to PMEM, and the subsequent transfer of PMEM output data over the crossbar data bus to the FPAU. The crossbar steering vector (the 3LSB of the address), which is provided by the FPAU along with the memory address (and parity), is initially sent through uni-directional crossbar switch 110 to select the proper PMEM module. During a read operation, the steering vector is also saved in a programmable length shift register 112 which provides the variable pipeline delay for subsequent steering of the memory output data to the requesting FPAU after the selected number of instruction cycle delays (either four or six) have elapsed. If a six cycle delay is selected, then two additional delay cycles must be added by programmable length shift register 114 to the data returning from memory (four delays are inherent, as set forth in Fig. 12 and the discussion which follows). Both data written into memory and read from memory passes across bidirectional bus 116 and through bidirectional crossbar switch 118.

Since the reading of a data sample from memory involves the utilization of the crossbar address bus for a single cycle, followed by the subsequent use of the crossbar data bus either four or six cycles later, block reads can be performed at a rate of one read per instruction cycle. A timing diagram illustrating the activity on the crossbar address bus and data bus for a memory read sequence of five samples with a four-cycle delay is presented in Fig. 12.

Interlaced patterns of memory reads and writes may be achieved as long as a processor does not attempt to write to a memory four cycles after a memory read has been initiated. To do so would cause a data bus clash since the processor cannot simultaneously transmit and receive data on crossbar data bus during the same instruction cycle. Similarly, if a six-cycle delay is selected, then no memory write cycle can be performed six cycles after a memory read has been initiated.

Many vector processing algorithms parameters executed by the processors exhibit repetitive patterns of memory reads and writes. For example, the multiplication of a vector by a constant requires two memory access cyles per vector element, a read of the next input vector element from memory, followed by a write of the next output vector element to memory. Since the entire vector processing sequence generates an alternating sequence of memory reads and memory writes, either a four or six-cycle delay can be selected. Memory writes will always occur at odd numbers of delay cycles relative to the memory read cycles.

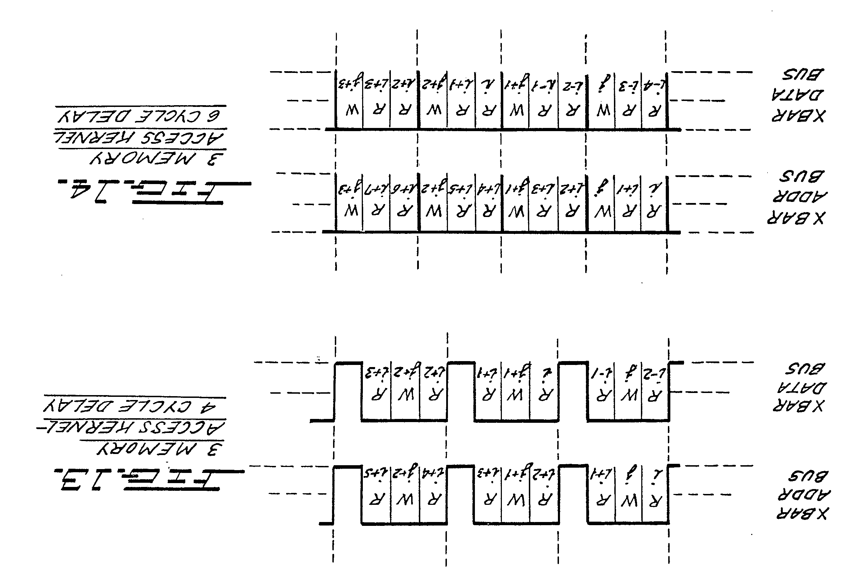

As a second example, in the addition of two vectors, the memory access sequence consists of a repetitive pattern of two memory read cycles followed by a memory write cycle ; this three cycle memory access pattern is repeated for every vector element. A timing diagram illustrating crossbar bus activity for this memory access pattern with a four-cycle delay is shown in Fig. 13, where the i and j notation represents the flow of data through the crossbar switch during the $i^{th}$ read cycle and $j^{th}$ write cycle, respectively. As shown in Fig. 13, with a four-cycle delay, extra instruction cycles are required to prevent bus clash. However, with a six-cycle delay select feature, illustrated in Fig. 14, the execution time of this algorithm is decreased by 25%.

Although the present invention has been described in connection with a preferred embodiment thereof, many variations and modifications will now become apparent to those skilled in the art. It is preferred, therefore, that the present invention be limited not by the specific disclosure herein, but only by the appended claims.

## Claims

1. A crossbar switch (4) in a computer system (1) for interconnecting any one of a plurality of arithmetic units (2) to any one of a plurality of memories (6) comprising :
a multiplexer section for providing switching of signal paths between said arithmetic units (2) and said memories (6) ; and
a control section for controlling said signal path switching to allocate selected signal paths in accordance with an algorithm under execution, said control section comprising control circuitry (110, 112, 114, 116) for creating pipeline delay of steering vectors which specify the memory to be read from and pipeline delay of data returning from the memory.

2. A crossbar switch as recited in claim 1, wherein the number of cycles in said pipeline delay is selectable.

3. A crossbar switch as recited in claim 2, wherein said pipeline delay is selectable between either four or six cycles or delay.

4. A crossbar switch as recited in claim 3, wherein a bidirectional data bus (116) is used for data transfer between said arithmetic units and said memories.

5. A crossbar switch as recited in claim 4, wherein memory reads and memory writes are interlaced in real time.

6. A crossbar switch as recited in claim 1, wherein said signal paths are switched on a cycle-by-cycle basis of a clock of said computer system.

7. A crossbar switch as recited in claim 1, wherein said control section is distributed.

8. A crossbar switch as recited in claim 1, comprising an 8x8x64 crossbar switch which connects 64 signals between any 8 arithmetic units and any 8 memories.

9. A crossbar switch as recited in claim 8, wherein said crossbar receives 64 signals comprised of 24 address bits, 3 address parity bits, 1 delay select bit, 32 data bits, and 4 data parity bits.

10. A crossbar switch as recited in claim 8, wherein said 8x8x64 crossbar switch is formed of 16 8x8x4 cards.

11. A crossbar switch as recited in claim 1, comprising a 4x4x64 crossbar switch formed of eight 4x4x8 cards.

12. A crossbar switch as recited in claim 1, comprising a 2x2x64 crossbar switch formed of four 2x2x16 cards.

EP 0 315 550 A2

_FIG.1_

HOST — _10_

16

MICRO CONTROLLER EXECUTIVE — _12_

2 / 2 / → NNØ-3

32

_1_

32 | 32 | 32 | 32 | 32 | 32 | 32 | 32

| FPAUØ | FPAU1 | FPAU2 | FPAU3 | FPAU4 | FPAU5 | FPAU6 | FPAU7 | _2_ |

42 | 42 | 42 | 42 | 42 | 42 | 42 | 42

64 | 64 | 64 | 64 | 64 | 64 | 64 | 64

AØ-3 | BØ-3 | CØ-3 | DØ-3 | EØ-3 | FØ-3 | GØ-3 | HØ-3

| CROSSBAR SWITCH | _4_ |

64 | 64 | 64 | 64 | 64 | 64 | 64 | 64

| PMEMØ | PMEM1 | PMEM2 | PMEM3 | PMEM4 | PMEM5 | PMEM6 | PMEM7 | _6_ |

FIG. 2.

| MØ | M1 | M2 | M3 | M4 | M5 | M6 | M7 |
|---|---|---|---|---|---|---|---|
| Ø | 1 | 2 | 3 | 4 | 5 | 6 | 7 |
| 8 | 9 | 1Ø | 11 | 12 | 13 | 14 | 15 |
| 16 | 17 | 18 | 19 | 2Ø | 21 | 22 | 23 |
| ⋮ | ⋮ | ⋮ | ⋮ | ⋮ | ⋮ | ⋮ | ⋮ |
| $2^{25}-8$ | $2^{25}-7$ | $2^{25}-6$ | $2^{25}-5$ | $2^{25}-4$ | $2^{25}-3$ | $2^{25}-2$ | $2^{25}-1$ |
| ⋮ | ⋮ | ⋮ | ⋮ | ⋮ | ⋮ | ⋮ | ⋮ |
| $2^{27}-8$ | $2^{27}-7$ | $2^{27}-6$ | $2^{27}-5$ | $2^{27}-4$ | $2^{27}-3$ | $2^{27}-2$ | $2^{27}-1$ |

FIG. 3.

| M0 | M1 | M2 | M3 | M4 | M5 | M6 | M7 |
|---|---|---|---|---|---|---|---|
| $b_1$ | $b_2$ | $b_3$ | $b_4$ | $b_5$ | $b_6$ | $b_7$ | $b_8$ |
| $b_9$ | $b_{10}$ | $b_{11}$ | $b_{12}$ | $b_{13}$ | $b_{14}$ | $b_{15}$ | $b_{16}$ |
| ┊ | ┊ | ┊ | ┊ | ┊ | ┊ | ┊ | ┊ |
| $b_{m-3}$ | $b_{m-2}$ | $b_{m-1}$ | $b_m$ | | | | |

FIG.4

| $a_{1,1}$ | $a_{1,2}$ | $a_{1,3}$ | $a_{1,4}$ | $a_{1,5}$ | $a_{1,6}$ | $a_{1,7}$ | $a_{1,8}$ |
|---|---|---|---|---|---|---|---|
| | | | | | | | |
| $a_{1,n-2}$ | $a_{1,n-1}$ | $a_{1,n}$ | | | | | |
| $a_{2,1}$ | $a_{2,2}$ | $a_{2,3}$ | $a_{2,4}$ | $a_{2,5}$ | $a_{2,6}$ | $a_{2,7}$ | $a_{2,8}$ |
| | | | | | | | |
| $a_{2,n-2}$ | $a_{2,n-1}$ | $a_{2,n}$ | | | | | |
| | | | | | | | |
| $a_{m,1}$ | $a_{m,2}$ | $a_{m,3}$ | $a_{m,4}$ | $a_{m,5}$ | $a_{m,6}$ | $a_{m,7}$ | $a_{m,8}$ |
| | | | | | | | |
| $a_{m,n-2}$ | $a_{m,n-1}$ | $a_{m,n}$ | | | | | |

FIG. 5.

FIG. 6A.

FIG. 6B.

FIG. 6C.

PMEM

M0 M1 M2 M3 M4 M5 M6 M7

0-3  4  (×8)

$8 \times 8 \times 4$

0-3  4  (×8)

A B C D E F G H

FPAU SIDE

FIG-7-

FPAU SIDE

A  Ø—3  4/ →

B  Ø—3  4/ →

C  Ø—3  4/ →

D  Ø—3  4/ →

4 X 4 X 4

Ø—3  4/ → MØ

Ø—3  4/ → M1

Ø—3  4/ → M2

Ø—3  4/ → M3

PMEM SIDE

EP 0 315 550 A2

FIG.8.

EP 0 315 550 A2

A    Ø-3    4/ →

B    Ø-3    4/ →

C    Ø-3    4/ →

D    Ø-3    4/ →

4 X 4 X 4

A    4-7    4/ →

B    4-7    4/ →

C    4-7    4/ →

D    4-7    4/ →

4 X 4 X 4

Ø-3    4/ →    MØ

Ø-3    4/ →    M1

Ø-3    4/ →    M2

Ø-3    4/ →    M3

4-7    4/ →    MØ

4-7    4/ →    M1

4-7    4/ →    M2

4-7    4/ →    M3

FIG. 9.

PMEM SIDE

FPAU SIDE

_FIG.10._

FPAU₁
ADDRESS & PARITY

NXNX28 BIT
UNIDIRECTIONAL
CROSSBAR SW.

{ 24 BITS ADDR.
3 BITS PARITY
1 BIT DELAYSEL }

110

PMEM₁
ADDRESS, PARITY

FPAUₙ
ADDRESS & PARITY

PMEMₙ
ADDRESS, PARITY

FPAU₁
STEERING
VECTOR

READ₁
DELAY
SELECT

PROGRAMMABLE
LENGTH
SHIFT REG.

112

MUX₁

WRITE₁

FPAUₙ
STEERING
VECTOR

READₙ

DELAY
SELECT

PROGRAMMABLE
LENGTH
SHIFT REG.

MUXₙ

WRITEₙ

114

PMEM₁
INPUT DATA

PROGRAMMABLE
LENGTH SHIFT
REGISTER

PMEM₁
OUTPUT
DATA

NXN X 36 BIT
BIDIRECTIONAL
CROSSBAR
SWITCH

DATA &
PARITY

FPAU₁
DATA

116

FPAUₙ
DATA

118

PMEMₙ
INPUT DATA

PROGRAMMABLE
LENGTH SHIFT
REGISTER

PMEMₙ
OUTPUT
DATA

FIG.11

EP 0 315 550 A2

**CLOCK CYCLE:** 0 1 2 3 4 5 6 7 8 9 10 11 12 13 14

**X BAR ADDR BUS:** 1 2 3 4 5

**MEMORY READ CYCLE:** 1 2 3 4 5

**EDAC:** 1 2 3 4 5

**PARITY GEN.:** 1 2 3 4 5

**X BAR DATA BUS:** 1 2 3 4 5

### EVENTS OCCURRING

- TRANSFER STEERING VECTOR FROM FPAU TO XBAR; TRANSFER MEMORY ADDRESS FROM FPAU TO PMEM
- FETCH CONTENTS OF MEMORY AT ADDRESSED LOCATION
- ERROR DETECTION AND CORRECTION
- GENERATE PARITY
- TRANSFER DATA FROM PMEM TO FPAU (4 CYCLE DELAY)

FIG. 12.

FIG.13.

3 MEMORY ACCESS KERNEL— 4 CYCLE DELAY

FIG.14.

3 MEMORY ACCESS KERNEL 6 CYCLE DELAY

EP 0 315 550 A2